# EUROPÄISCHE PATENTSCHRIFT

(11) **EP 2 957 374 B1**
(45) Veröffentlichungstag und Bekanntmachung des Hinweises auf die Patenterteilung: **19.12.2018**
(21) Anmeldenummer: 14173212.3
(22) Anmeldetag: 20.06.2014
(51) Int. Cl.: B23K 11/00, B23K 11/34, F28F 9/18

(54) **Verfahren zum elektrischen Verschweissen**
Electric welding process
Procédé de soudage électrique

(43) Veröffentlichungstag der Anmeldung: 23.12.2015
(73) Patentinhaber: Arbonia Solutions AG, 9320 Arbon (CH)
(72) Erfinder: von Däniken, Kurt, 8268 Mannenbach-Salenstein (CH)
(74) Vertreter: Patentanwälte Bressel und Partner mbB

(56) Entgegenhaltungen:
- DE-A1- 2 646 234

## Beschreibung

Die Erfindung betrifft ein Verfahren zum elektrischen Verschweissen von eng nebeneinander liegenden Metallelementen an mindestens einem Profil aus Metall nach dem Oberbegriff des Anspruchs 1.

Insbesondere soll das Verfahren dabei für die Herstellung von Heizkörpern Anwendung finden, wobei mehrere eng bzw. nahezu unmittelbar nebeneinander liegende Heizrohre an ihren Enden mit einer Seitenfläche eines Sammelrohres verschweißt werden.

Derartige Heizkörper werden beispielsweise in den Druckschriften DE 26 46 234 A1, DE 1 552 062 C, DE 3201439 C2 und DE 3026731 A1 beschrieben. Weil die Heizrohre sehr eng nebeneinander mit den Sammelrohren verschweißt werden sollen und auf Grund der Medienführung durch die Heizrohre in die Sammelrohre oder umgekehrt sowie aus gestalterischen Gründen nur eine Schweissverbindung zwischen den Elementen und dem Profil und keinesfalls zwischen den Elemente eine Schweissstelle (Nebenschluss) entstehen darf, werden die Heizrohre bei den bekannten Flachrohr - Heizkörpern standardmäßig mittels Schutzgasschweißen (also manuell) hergestellt

Die Aufgabe der Erfindung besteht deshalb darin diese Nachteile zu vermeiden. Insbesondere soll durch das erfindungsgemäße Verfahren, die Serienfertigung in einer teilautomatisierten oder vollautomatisierten Produktion, insbesondere von aus Flachrohren bestehenden Heizkörpern mit enge nebeneinander liegenden Heizrohren wesentlich vereinfacht werden.

Erfindungsgemäß wird diese Aufgabe durch die Merkmale des Anspruchs 1 gelöst. Vorteilhafte Weiterbildungen der Erfindung sind in den zugehörigen Ansprüchen enthalten.

Demnach bezieht sich die Erfindung auf ein Verfahren zum elektrischen Verschweissen von nebeneinander liegenden Metallelementen an mindestens einem Profil aus Metall, wobei zwischen den Metallelementen Isolationsbereiche angeordnet werden. Vorteilhaft werden dadurch die Metallelemente elektrisch voneinander getrennt, wobei der elektrische Strom beim Schweißvorgang durch die Anordnung der Isolationsbereiche gezielt geführt wird. Dabei ist vorgesehen, dass die Isolationsbereiche durch ein elektrisch isolierendes Material ausgebildet werden, welches einen hohen elektrischen Widerstand aufweist. Insbesondere wird dabei Papier und/oder Kunststoff als elektrisch isolierendes Material verwendet. Nach einem weiteren Merkmal der Erfindung ist vorgesehen, dass beim elektrischen Verschweißen ein elektrischer Pol an einem Metallelement und der andere elektrische Pol am Metallprofil angelegt werden. Die Metallelemente können dabei in einem beliebigen Winkel an die Metallprofile geschweisst werden, wobei diese jedoch einen direkten Kontaktbereich aufweisen, damit elektrischer Strom beim Verschweißen fliessen kann. Vorteilhaft bestehen die Metallelemente und die Metallprofile dabei aus Metallen wie Stahl, Aluminium, Kupfer sowie aus zum Schweissen möglichen Legierungen. Insbesondere ist vorgesehen, dass die Metallelemente und Metallprofile Hohlkörpern und/oder Rohre sind, wobei das Verfahren vorteilhaft für die Herstellung von Heizkörpern mit eng nebeneinander liegenden Heizrohren, welche mit Sammelrohren verbunden sind, eingesetzt werden kann.

Vorteilhaft besteht dabei das elektrisch isolierende Material aus einem durchgängigen Band oder aus mehreren einzelnen Stücken, so genannten Pads, die in einem bestimmten Abstand zueinander und/oder direkt nebeneinander auf dem Band angeordnet sind. Vorzugsweise werden mindestens zwei Pads eingesetzt. Die Pads werden dabei vor dem Verschweißen mit den Metallelementen durch Einklemmen, Heften oder Kleben verbunden.

Nach einem besonderen Merkmal werden die Pads vorteilhaft in einem Applikator angeordnet und mit Hilfe des Applikators auf die Metallelement aufgebracht. Vorzugsweise ist vorgesehen, dass der Applikator die Pads durch einen durch eine Matrize bewegten Stempel von einem durch diesen gezogenen Band ausschneidet und direkt auf die Metallelemente aufbringt.

Weitere Einzelheiten ergeben sich aus der nachfolgenden Beschreibung und den Zeichnungen, in denen verschiedene Ausführungen des Erfindungsgegenstandes rein beispielhaft dargestellt sind.

Es zeigen
Fig. 1 eine beispielhafte schematische Anordnung eines Metallprofils unten liegend zu den Metallelementen oben liegend mit den dazwischen liegenden Pads und beiden elektrischen Polen der Schweißvorrichtung.
Fig. 2 ein Metallprofil mit einem an einer seitlichen Wandung aufgebrachtem Isolationsbereich in Form eines Klebebandes.

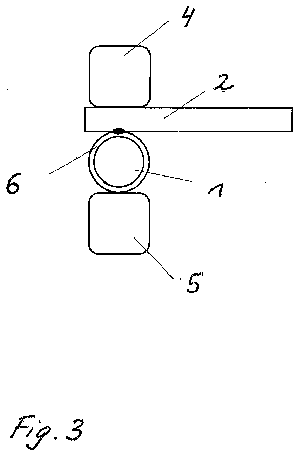

Fig. 3 eine Seitenansicht zur Fig. 1 mit Schweißverbindung.
Fig. 4 eine schematische Darstellung eine Applikators.

Für das erfindungsgemäße Verfahren werden die Metallprofile und Metallelemente vor dem Schweissprozess auf diesen Prozess vorbereitet.

Unter vorbereitet werden dabei die notwendigen vorgängigen mechanischen Bearbeitungsschritte verstanden.

Weil mehrere Metallelemente 2 sehr eng nebeneinander auf einem Profilrohr 3 geschweisst werden sollen und einerseits auf Grund der Medienführung durch die Metallelemente in die Metallprofile oder umgekehrt sowie andererseits aus gestalterischen Gründen nur eine Schweissverbindung 6 zwischen den Metallelementen und dem Metallprofil und keinesfalls zwischen den Metallelemente eine Schweissstelle (Nebenschluss) entstehen darf, müssen um dies zu verhindern die Metallelemente 2 elektrisch isolierend voneinander getrennt werden, obwohl sie möglichst nahe beieinander liegen sollen.

Um diese Trennung zu Erreichen, wird durch das vorliegende Verfahren vor dem eigentlichen Verfahrensschritt des Verschweissens und dem richtigen anordnen der Metallelementen 2 ein Isolationsbereich 3 (Trennschicht) zwischen den Metallelementen 2 angeordnet.

Mittels des vorliegenden Verfahrens soll es also ermöglicht werden, nebeneinander liegende Metallelemente 2 in einem beliebigen Winkel auf ein Metallprofil 1 zu schweissen.

Dazu werden als Isolationsbereiche 3 vorzugsweise Pads vorgesehen, die vor dem Verschweißen durch Einklemmen, Heften oder Kleben zwischen die nebeneinander liegenden Metallelemente 2 gebracht.

Die Pads verhindern ein Zusammenschweissen der Metallelemente 2 und gewährleisten die Verbindung der Metallelemente 2 mit dem Metallprofil 1, da sie einen definierten Isolationsbereich 3 zwischen den Elementen bilden und den Schweissstrom zwischen den Elektroden 4 und 5 direkt lenken.

Damit lassen sich zum Beispiel mit Flüssigkeit durchströmte Rohre gezielt dicht zu einem Paket verschweissen. Dieses Verfahren kann deshalb besonders vorteilhaft bei der Herstellung von mit Medien durchströmten Konstruktionen wie beispielsweise Heizwänden eingesetzt werden.

Diese den Isolationsbereich 3 bildenden Pads können als selbst klebende Pads oder ohne Beschichtung ausgeführt werden.

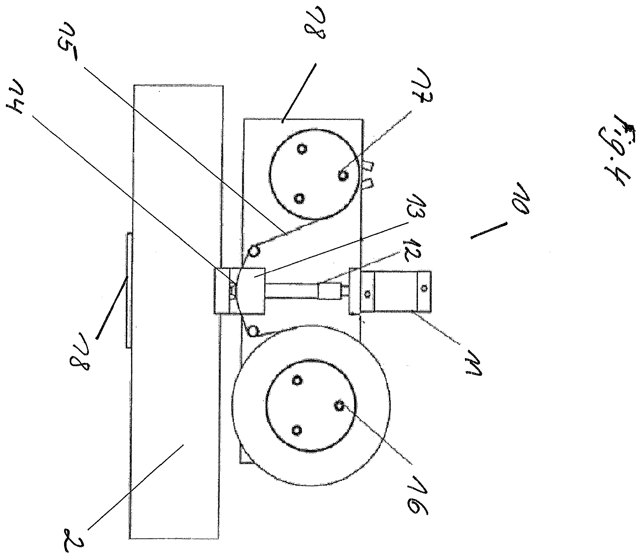

Diese Pads werden vorzugsweise mit Hilfe eines Applikators direkt auf die Elemente 2 gedrückt. Der Applikator 10 wird in einer schematischen Darstellung in der Fig. 4 gezeigt. Der Applikator 10 umfasst einen Aktuator 11 mit einem Stempel 12, eine Bandführung 13 und eine Matritze 14. Der Aktuator 11 ist dabei als Antriebselement ausgebildet, welches elektrischen Signale (z. B. vom Steuerungscomputer ausgehende Befehle in eine mechanische Bewegung umsetzt. Zur Bewegung des Klebebandes sind weiter ein Rollenhalter 16 und ein Bandvorschub 17 vorgesehen. Die vorgenannten Teile des Applikators sind auf einer Führung 18 angeordnet, die entlang der Metallelemente 2 zur Aufbringung der Pads geführt wird.

Der Applikator 10 stanzt dabei aus dem Klebeband 15 mit dem Stempel 12 durch die Matrize 14 des Applikators 10 die Pads aus. Die Matrize zeichnet sich durch einen Anzug an der Aussenseite aus, damit das Klebeband 15 nicht an der Matrize 14 kleben kann, da das Klebeband 15 auch die Funktion eines Trägerbands übernimmt.

Die Form der gestanzten Pads kann unterschiedlich ausgeführt werden. In der Praxisanwendung eignen sich am besten abgerundete Rechtecke oder Ellipsen.

Profile können ebenfalls mehrere nebeneinander angeordnet werden. Falls diese keinen Abstand zueinander aufweisen würden, müssen zwischen diesen ebenfalls Isolationsschichten berücksichtigt werden.

Vorteilhaft ist, dass die Pads aus geeignetem Material in der geeignet Wandstärke und an den relevanten Stellen aufgetragen werden können. Die Pads sind beispielsweise in einem Abstand von 200-300 mm angeordnet. Der Abstand ist abhängig von der Formtoleranz des Rohres d.h. bei formgenauen Rohren werden zwei Pads als ausreichend angesehen. Bei der Stärke der Pads, ist die anschliessende Pulverbeschichtung der Rohre zu berücksichtigen. Tests haben gezeigt, dass bei einer Stärke der Pads von 0,1 mm die Farbschicht (über dem 0,1 mm Spalt) geschlossen ist.

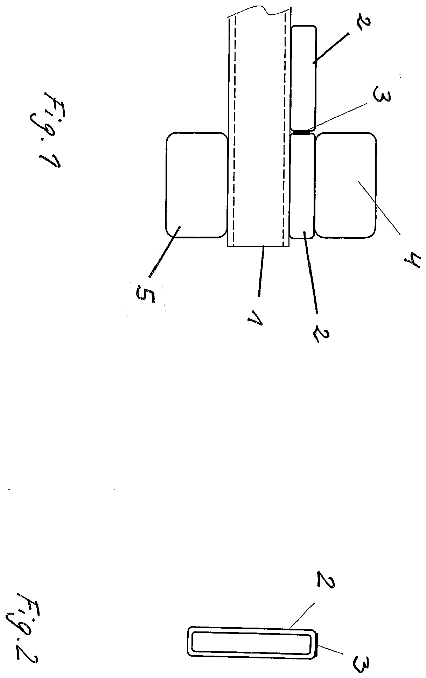

Eine andere Ausführungsart sieht vor, dass über die gesamte Lange der Elemente 2 Isolationsstreifen 3 (Fig. 2) eingebracht werden.

Diese Isolationsstreifen können ausgeführt werden als perforierte Streifen, welche sich auf einer Folienrolle befinden.

Sobald die Elemente mit der dazwischen liegenden Isolationsschicht positioniert sind, werden die Elemente an das Profil geschweisst.

## Patentansprüche

1. Verfahren zum elektrischen Verschweissen von nebeneinander liegenden Metallelementen (2) an mindestens einem Profil (1) aus Metall, wobei zwischen den Metallelementen (2) Isolationsbereiche (3) angeordnet werden, wodurch die Metallelemente (2) elektrisch voneinander getrennt werden und der elektrische Strom beim Schweißen durch die Anordnung der Isolationsbereiche (3) gezielt geführt wird, **dadurch gekennzeichnet, dass** die Isolationsbereiche (3) durch ein elektrisch isolierendes Material ausgebildet werden, welches einen hohen elektrischen Widerstand aufweist.

2. Verfahren nach Anspruch 1, **dadurch gekennzeichnet, dass** beim elektrischen Verschweißen ein elektrischer Pol (4) an einem Metallelement (2) und der andere elektrische Gegenpol (5) am Metallprofil (1) angelegt werden.

3. Verfahren nach den Ansprüchen 1 und 2, **dadurch gekennzeichnet, dass** die Metallelemente (2) in einem beliebigen Winkel an die Metallprofile (1) geschweisst werden, wobei diese jedoch einen direkten Kontaktbereich aufweisen, damit elektrischer Strom beim Verschweißen fliessen kann.

4. Verfahren nach den Ansprüchen 1-3, **dadurch gekennzeichnet, dass** die Metallelemente (2) und die Metallprofile (1) aus Metallen wie Stahl, Aluminium, Kupfer sowie aus zum Schweissen möglichen Legierungen bestehen.

5. Verfahren nach einem der o. g Ansprüche 1-4, **dadurch gekennzeichnet, dass** die Metallelemente (2) und Metallprofile (1) Hohlkörpern und/oder Rohre sind.

6. Verfahren nach einem der o.g. Ansprüche 1-5, **dadurch gekennzeichnet, dass** als elektrisch isolierendes Material Papier und/oder Kunststoff verwendet wird.

7. Verfahren nach einem der o. g Ansprüche 1-6, **dadurch gekennzeichnet, dass** das elektrisch isolierende Material aus einem durchgängigen Band oder aus mehreren einzelnen Stücken, d.h. Pads, besteht, die in einem bestimmten Abstand zueinander und/oder direkt nebeneinander angeordnet sind.

8. Verfahren nach Anspruch 7 **dadurch gekennzeichnet, dass** estens zwei Pads eingesetzt werden.

9. Verfahren nach einem der o. g Ansprüche 7 und 8 **dadurch gekennzeichnet, dass** die Pads vor dem Verschweißen mit den Metallelementen durch Einklemmen, Heften oder Kleben verbunden werden.

10. Verfahren nach einem der o. g Ansprüche 7-9 **dadurch gekennzeichnet, dass** die Pads in einem Applikator (10) angeordnet sind und mit Hilfe des Applikators (10) auf die Metallelemente (2) aufgebracht werden.

11. Verfahren nach Anspruch 10, **dadurch gekennzeichnet, dass** der Applikator (10) einen Aktuator (11) mit einem Stempel (12), eine Bandführung (13) und eine Matritze (14) umfasst und zur Bewegung eines Klebebandes (15) ein Rollenhalter (16) und ein Bandvorschub (17) vorgesehen sind, wobei die vorgenannten Teile des Applikators (10) auf einer Führung (18) angeordnet sind, die entlang der Metallelemente (2) zur Aufbringung der Pads geführt wird.

12. Verfahren nach den Ansprüchen 10 und 11, **dadurch gekennzeichnet, dass** der Applikator (10) die Pads durch den durch die Matritze (14) bewegten Stempel (12) von dem durch diesen gezogenen Band (15) ausschneidet und direkt auf die Metallelemente (2) aufbringt.

13. Verfahren nach einem der o. g Ansprüche 1-11 **dadurch gekennzeichnet, dass** die Metallelemente (2) als Heizrohre und die Metallprofile (1) als Sammelrohre eines Heizkörpers ausgebildet sind und das Verfahren nach den Merkmalen der o.g. Ansprüche 1 bis 12 bei der Herstellung von Heizkörpern verwendet wird.

## Claims

1. Process for electrically welding metal elements (2) lying next to one another to at least one profile (1) of metal, insulating regions (3) being arranged between the metal elements (2), thereby the metal elements (2) being electrically separated from one another and during welding the electric current being directed in a target manner to pass through the arrangement of the insulating regions (3), **characterized in that** the insulating regions (3) are formed by an electrically insulating material that has a high electrical resistance.

2. Process according to Claim 1, **characterized in that**, during the electrical welding, one electrical terminal (4) is applied to a metal element (2) and the other, opposite terminal (5) is applied to the metal profile (1).

3. Process according to Claims 1 and 2, **characterized in that** the metal elements (2) are welded to the metal profiles (1) at any desired angle, these metal profiles having a direct contact region in order that electric current can flow during the welding.

4. Process according to Claims 1-3, **characterized in that** the metal elements (2) and the metal profiles (1) consist of metals such as steel, aluminium, copper and alloys suitable for welding, as well.

5. Process according to one of the aforementioned Claims 1-4, **characterized in that** the metal elements (2) and metal profiles (1) are hollow bodies and/or tubes.

6. Process according to one of the aforementioned Claims 1-5, **characterized in that** paper and/or plastic is used as the electrically insulating material.

7. Process according to one of the aforementioned Claims 1-6, **characterized in that** the electrically insulating material consists of a continuous strip or a number of individual pieces, i.e. pads, which are arranged at a certain distance from one another and/or directly next to one another.

8. Process according to Claim 7, **characterized in that** at least two pads are used.

9. Process according to either of the aforementioned Claims 7 and 8, **characterized in that**, before the welding, the pads are connected to the metal elements by clamping, tacking or adhesive bonding.

10. Process according to one of the aforementioned Claims 7-9, **characterized in that** the pads are arranged in an applicator (10) and are applied to the metal elements (2) with the aid of the applicator (10).

11. Process according to Claim 10, **characterized in that** the applicator (10) comprises an actuator (11) with a punch (12), a strip guide (13) and a die (14) and, for moving an adhesive strip (15), a roll holder (16) and a strip feed (17) are provided, the aforementioned parts of the applicator (10) being arranged on a guide (18), which is guided along the metal elements (2) for the application of the pads.

12. Process according to Claims 10 and 11, **characterized in that** the applicator (10) cuts out the pads by the punch (12) moved through the die (14) from the strip (15) pulled through said die latter and applies them directly to the metal elements (2).

13. Process according to one of the aforementioned Claims 1-11, **characterized in that** the metal elements (2) are formed as heating pipes and the metal profiles (1) are formed as collecting pipes of a heating radiator and the process is used according to the features of the aforementioned Claims 1 to 12 in the production of heating radiators.

## Revendications

1. Procédé de soudage électrique d'éléments métalliques (2) reposant les uns à côté des autres sur au moins un profilé (1) en métal, des zones d'isolation (3) étant disposées entre les éléments métalliques (2), les éléments métalliques (2) étant ainsi séparés les uns des autres et le courant électrique étant ainsi guidé de manière ciblée lors du soudage par l'arrangement des zones d'isolation (3), **caractérisé en ce que** les zones d'isolation (3) sont formées par un matériau électriquement isolant qui possède une résistance électrique élevée.

2. Procédé selon la revendication 1, **caractérisé en ce que** lors du soudage électrique, un pôle électrique (4) est appliqué à un élément métallique (2) et l'autre pôle opposé électrique (5) au profilé métallique (1).

3. Procédé selon les revendications 1 et 2, **caractérisé en ce que** les éléments métalliques (2) sont soudés aux profilés métalliques (1) dans un angle quelconque, ceux-ci possédant cependant une zone de contact direct afin que le courant électrique puisse s'écouler lors du soudage.

4. Procédé selon les revendications 1 à 3, **caractérisé en ce que** les éléments métalliques (2) et les profilés métalliques (1) se composent de métaux tels que l'acier, l'aluminium, le cuivre et aussi d'alliages possibles pour le soudage.

5. Procédé selon l'une des revendications précédentes 1 à 4, **caractérisé en ce que** les éléments métalliques (2) et les profilés métalliques (1) sont des corps creux et/ou des tubes.

6. Procédé selon l'une des revendications précédentes 1 à 5, **caractérisé en ce que** le matériau électriquement isolant utilisé est du papier et/ou une matière plastique.

7. Procédé selon l'une des revendications précédentes 1 à 6, **caractérisé en ce que** le matériau électriquement isolant se compose d'une bande continue ou de plusieurs morceaux individuels, c'est-à-dire des tampons, qui sont disposés à un écart défini les uns par rapport aux autres et/ou directement les uns à côté des autres.

8. Procédé selon la revendication 7, **caractérisé en ce qu'**au moins deux tampons sont insérés.

9. Procédé selon l'une des revendications précédentes 7 et 8, **caractérisé en ce que** les tampons sont reliés par serrage, agrafage ou collage avant le soudage avec les éléments métalliques.

10. Procédé selon l'une des revendications précédentes 7 à 9, **caractérisé en ce que** les tampons sont disposés dans un applicateur (10) et sont appliqués sur les éléments métalliques (2) à l'aide de l'applicateur (10).

11. Procédé selon la revendication 10, **caractérisé en ce que** l'applicateur (10) comporte un actionneur (11) muni d'un poinçon (12), un guide-bande (13) et une matrice (14) et un porte-galets (16) ainsi qu'un mécanisme de bande (17) sont présents pour le déplacement d'une bande adhésive (15), les pièces susmentionnées de l'applicateur (10) étant disposées sur un dispositif de guidage (18) qui est guidé le long des éléments métalliques (2) en vue de l'application des tampons.

12. Procédé selon les revendications 10 et 11, **caractérisé en ce que** l'applicateur (10) découpe les tampons par le biais du poinçon (12) déplacé par la matrice (14) de la bande (15) tirée à travers celui-ci et les applique directement sur les éléments métalliques (2).

13. Procédé selon l'une des revendications précédentes 1 à 11, **caractérisé en ce que** les éléments métalliques (2) sont réalisés sous la forme de tubes chauffants et les profilés métalliques (1) sous la forme de tubes collecteurs d'un corps de chauffe et le procédé selon les caractéristiques des revendications précédentes 1 à 12 est utilisé lors de la fabrication de corps de chauffe.
